# EUROPEAN PATENT APPLICATION

(11) **EP 3 056 454 A1**
(43) Date of publication of application: **17.08.2016**
(21) Application number: 13895339.3
(22) Date of filing: 11.10.2013
(51) Int. Cl.: B65G 1/137

(54) **TRANSFER ROBOT SYSTEM**

(71) Applicant: Hitachi, Ltd., Chiyoda-ku Tokyo 100-8280 (JP)
(72) Inventor: KIMURA, Nobutaka, Tokyo 100-8280 (JP); WATANABE, Takashi, Tokyo 100-8280 (JP)
(74) Representative: MERH-IP Matias Erny Reichl Hoffmann Patentanwälte PartG mbB
(86) International application number: PCT/JP2013/077696
(87) International publication number: WO 2015/052825

(57) **Abstract**

Disclosed is a transfer robot system (10) wherein: a robot (200) has a connecting unit (202), which removably holds a rack (100), and which can be electrically connected to the rack (100), a drive unit (203), and a control unit (211); and the control unit (211) moves the robot (200) to the vicinity of a first rack (100x) by means of the drive unit (203), moves the robot (200) and the first rack (100x) to the vicinity of a second rack (100y) by connecting the robot and the first rack to each other by means of the connecting unit (202), supplies power to a transfer unit (101) of the first and/or second rack (100x/100y) via the connecting unit (202), operates the transfer unit (101) corresponding to positions where articles (130a, b, c) to be moved are placed, and moves the articles (130a, b, c) to predetermined areas on the other rack (100y) from the rack (100x) having the articles (130a, b, c) placed thereon.

## Description

### TECHNICAL FIELD

The present invention relates to a transfer robot system using a transfer robot that transfers a rack having an article stored therein.

### BACKGROUND ART

A robot which takes in charge of a transfer operation of moving an article from a position to another position is called an automated guided vehicle or an AGV and is widely introduced to facilities, such as warehouses, factories, and harbors.

In addition, the robot can be used in combination with a loading and unloading device which automatically performs an operation of exchanging articles between an article storage place and a transfer robot, that is, a loading and unloading operation to automate most of the commodity distribution operations in facilities.

In recent years, the number of warehouses that store a wide variety of products in small quantities, such as mail-order warehouses, has increased with the diversification of customer needs. As a result, it takes a lot of time, labor, and cost to search for articles and to load the articles in terms of the properties of commodity management. For this reason, there is a demand for automating a distribution operation in facilities, such as warehouses which treat single articles in large quantities.

Patent Document 1 discloses a system in which movable storage racks are arranged in a space, such as a warehouse, and a transfer robot is combined with a rack having a necessary article or part stored therein and transfers each storage rack to a workshop in which articles are packed or products are assembled, as an example of the transfer of articles in a mail-order warehouse which treats a wide variety of products or a factory which produces a wide variety of products in small quantities.

Patent Document 2 discloses a warehouse system which includes a transfer robot and an automatic loading and unloading device. In the system, the loading and unloading device which moves an article from a rack to the transfer robot is attached to a storage rack. When the transfer robot is connected to the loading and unloading device, the robot supplies power to the loading and unloading device and controls the loading and unloading device. In this way, it is possible to automate a loading and unloading operation, without providing a power supply in the loading and unloading device.

Patent Document 3 discloses a technique which stores wafers that are produced in large quantities in a factory in a multi-stage storage rack provided in a transfer robot and transfers the wafers at one time.

### CITATION LIST

### PATENT DOCUMENT

Patent Document 1: JP 2009-539727 A
Patent Document 2: JP 4-333404 A
Patent Document 3: JP 10-303274 A

### SUMMARY OF THE INVENTION

### PROBLEMS TO BE SOLVED BY THE INVENTION

The method disclosed in Patent Document 1 has to transfer all of the articles stored in a rack at the same time when a certain article stored in the rack is required.

When most of the articles stored in the rack are not necessary, the consumption of energy increases by an amount corresponding to the weight of unnecessary articles.

As such, in Patent Document 1, a technique which individually transfers only a necessary article or only a tray having the necessary article stored therein is not considered.

When a plurality of necessary articles are separately stored in different racks, all of the racks need to be transferred to the workshop.

Therefore, it is necessary to perform a transfer operation between a storage area and a work area a number of times corresponding to the number of racks. As a result, transfer time efficiency and energy efficiency are not high.

In contrast, in the method disclosed in Patent Document 2, a necessary article or tray is stored in the storage space of the transfer robot. Therefore, it is possible to transfer only a necessary article. However, there is a limit in the article storage capacity of the robot and the number of articles which can be transferred at one time is limited.

In the technique disclosed in Patent Document 3, the multi-stage storage space is provided in the robot. Therefore, it is possible to transfer a plurality of articles. However, the multi-stage storage space is a portion of the robot. When the robot is moved without storing a necessary article, it is necessary to continuously hold the multi-stage storage rack which is a heavy rack.

Therefore, when a robot which can transfer a large number of articles is moved in a normal mode in which the robot does not transfer an article or a tray, a total carrying weight including the weight of the robot increases, which results in a reduction in energy efficiency.

In the techniques according to the related art, it is necessary to carry an excessively heavy article in at least one of the normal movement mode in which no article is carried and the article transfer mode.

The invention has been made in view of the above-mentioned problems and an object of the invention is to provide a transfer robot system which automatically transfers a large number of articles at one time and has high transfer time efficiency and high energy efficiency in both a normal movement mode and an article transfer mode.

### SOLUTIONS TO PROBLEMS

In order to achieve the object, according to the invention, there is provided a transfer robot system including: a plurality of movable racks each of which includes a transfer unit for moving a stored article; at least one robot that is capable of transferring a predetermined rack to a predetermined position; and a management terminal that issues a transfer instruction to the robot. The robot detachably holds the rack and includes a connection portion that is electrically connected to the rack, a driving unit, and a control unit. The control unit moves the robot to a vicinity of a first rack, using the driving unit, connects the robot to the first rack through the connection portion, moves the robot and the first rack to a vicinity of a second rack, supplies power to the transfer unit of the first rack or/and the second rack through the connection portion, operates the transfer unit corresponding to a position where an article to be moved is placed, and moves the article to be moved from a rack in which the article to be moved is placed to a predetermined position of another rack.

### EFFECTS OF THE INVENTION

According to the invention, in the transfer robot system which can carry a large number of articles at one time, it is possible to achieve an automatic transfer technique which has high transfer time efficiency and high energy efficiency in both a normal movement mode and an article transfer mode.

### BRIEF DESCRIPTION OF THE DRAWINGS

Fig. 1 is a diagram illustrating an example of the structure of a transfer robot system 10a according to Embodiment 1.
Fig. 2 is a flowchart illustrating an example of the overall operation of the transfer robot system 10 for one task 902x in Embodiment 1.
Fig. 3 is a diagram illustrating an example of the structure of a rack 100a in Embodiment 1.
Fig. 4 is a diagram illustrating an example of the structure of a contacted surface 103 in Embodiment 1.
Fig. 5 is a diagram illustrating an example of the structure of a rack 100b in Embodiment 1.
Fig. 6 is a diagram illustrating an example of the structure of a robot 200 in Embodiment 1.
Fig. 7 is a diagram illustrating an example of the structure of a contact surface 207 in Embodiment 1.
Fig. 8 is a diagram schematically illustrating an aspect in which a connected portion 102 and a connection portion 202 are connected to each other in Embodiment 1.
Fig. 9 is a diagram schematically illustrating an aspect in which a rack 100x is prepared in Embodiment 1.
Fig. 10 is a flowchart illustrating an example of the operation of a robot 200x and a robot 200y when the rack 100x is prepared in Embodiment 1.
Fig. 11 is a diagram illustrating an example of the structure of rack information 905 related to the rack 100 which is checked by a management terminal 300 in Embodiment 1.
Fig. 12 is a diagram illustrating an example of the structure of an order 900 which is input to the management terminal 300 in Embodiment 1.
Fig. 13 is a diagram illustrating an example of the structure of a task 902 which is created by the management terminal 300 in Embodiment 1.
Fig. 14 is a diagram illustrating an example of the structure of state transition information 915 of the rack 100 in Embodiment 1.
Fig. 15 is a diagram schematically illustrating an aspect in which articles are exchanged between storage spaces with different heights in Embodiment 1.
Fig. 16 is a diagram illustrating an example of the structure of a transfer robot system 10b according to Embodiment 2.
Fig. 17 is a diagram illustrating an example of the structure of a stage change transfer rack 600 in Embodiment 2.
Fig. 18 is a diagram schematically illustrating an aspect in which articles are exchanged between storage spaces with different heights in Embodiment 2.
Fig. 19 is a diagram schematically illustrating an aspect in which one robot 200x controls the operation of the racks 100x and 100y in Embodiment 1.
Fig. 20 is a diagram illustrating the structure of a management terminal function 310 of the management terminal 300 in Embodiment 1.

### MODE FOR CARRYING OUT THE INVENTION

Hereinafter, embodiments will be described with reference to the drawings.

### Embodiment 1

In this embodiment, an example of a transfer robot system 10a which transfers articles between racks will be described on the assumption that articles are stored in or delivered from a mail-order warehouse or a factory that manufactures a wide variety of products in small quantities. In this embodiment, a mail-order warehouse is given as a preferred example. In the invention, the number of articles or the type of article is not particularly limited. In addition, the invention may be applied to all manufacturing factories.

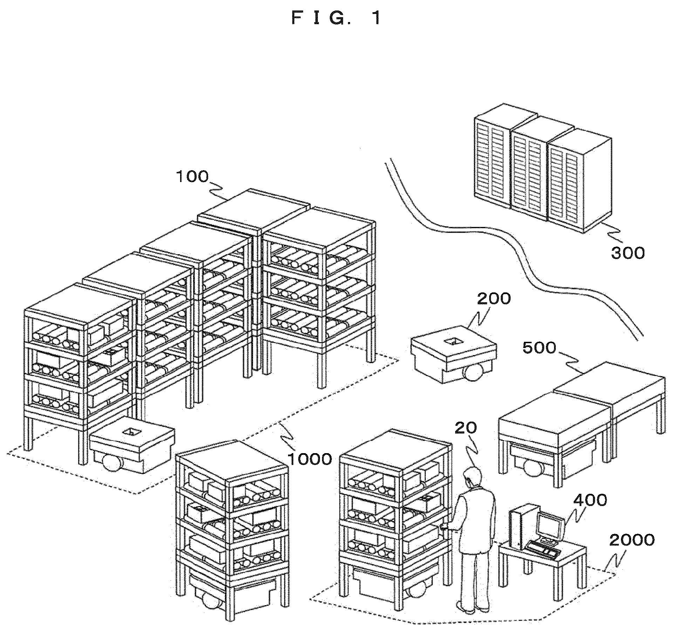

Fig. 1 is a diagram illustrating an example of the structure of the transfer robot system 10a according to this embodiment. The transfer robot system 10a includes two or more racks 100, one or more robots 200, a management terminal (hereinafter, also referred to as a management computer) 300, a user interface 400, and a charging station 500.

In this embodiment, an example in which two or more racks 100 and two or more robots are provided in a warehouse will be described, if not otherwise specified.

A plurality of racks 100 are installed in a storage area 1000. A plurality of articles are stored in some racks and no article is stored in some racks. The user interface 400 is installed in a work area 2000. An operator 20 performs, for example, an operation of taking out articles from a rack 100x transferred by a robot 200x or an operation of supplementing articles.

The user interface 400 is, for example, a PC. The management computer 300 and the user interface 400 can communicate with each other wirelessly or in a wired manner and each include a transmitting unit and a receiving unit (not illustrated). In addition, the management computer 300 and the robot 200 can wirelessly communicate with each other. The robot 200 includes a transmitting unit and a receiving unit (not illustrated).

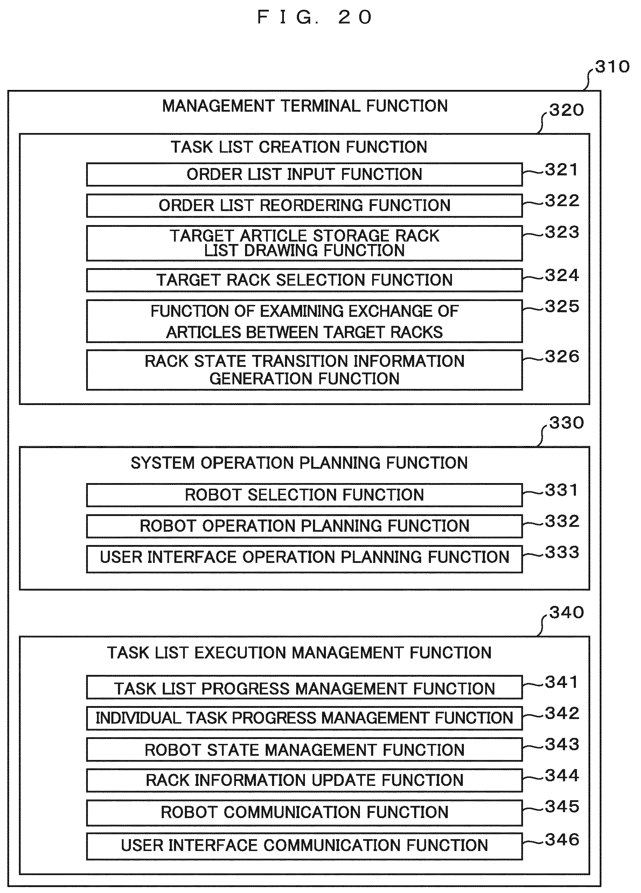

The management computer 300 manages and operates the entire transfer robot system 10a. It is assumed that the function of the management computer 300 is referred to as a management terminal function 310. Fig. 20 is a diagram illustrating an example of the structure of the management terminal function 310 in this embodiment. The management terminal function 310 is mainly classified into a task list creation function 320 that creates a task list 903 in which the state transition of the rack 100 is described in detail, a system operation planning function 330 that plans the operation of the robot 200 or the user interface 400 in the transfer robot system 10a, and a task list execution management function 340 that manages the execution state of the task list 903 by the transfer robot system 10a.

First, the task list creation function 320 will be described. An administrator 30 of the transfer robot system 10a inputs an order list 901 of all orders 900 to be executed for a predetermined period of time, for example, for a day to the management computer 300, using an order list input function 321 of the management computer 300.

The order 900 is ordering or supplementing articles or parts. For example, the management computer 300 reorders the order list 901, using an order list reordering function 322, plans a plurality of tasks 902 for executing all of the orders, and creates the task list 903. The task 902 is a series of operations of the transfer robot system 10a for the operation of the operator 20 for one rack 100. In this embodiment, it is assumed that, when the task list 903 is created, how to allocate the robot 200 to the task 902 or the charging time of the robot 200 has not been determined. However, the allocation and the charging time may be determined when the task list 903 is created.

In this embodiment, when creating the task list 903, first, the management computer 300 checks each order 900 in the order list 901 and performs a reordering process of collecting the orders 900 for the same type of articles (order list reordering function 322). When the transfer robot system 10a is introduced, for the same type of articles, small-size articles 120 are stored in a single tray 110 and the tray 110 and the medium-size articles 130 are stored in a single rack 100 in advance. The reordering process makes it possible to prevent the same rack 100 from being transferred many times, particularly, during a delivery operation. As a result, it is possible to improve transfer efficiency.

Then, a list of the racks 100 in which the articles described in a plurality of collected orders 900 are to be stored is drawn up (target article storage rack list drawing function 323). A rack 100x to be moved to the work area 200 and a rack 100y which exchanges articles with the rack 100x are selected from the list of the racks 100 (target rack selection function 324). Only one rack 100x is selected. However, the number of racks 100y is not particularly limited. The articles to be stored in the rack 100x are compared with the articles which are currently stored in the rack 100x. When there is no difference therebetween, the rack 100y is not selected.

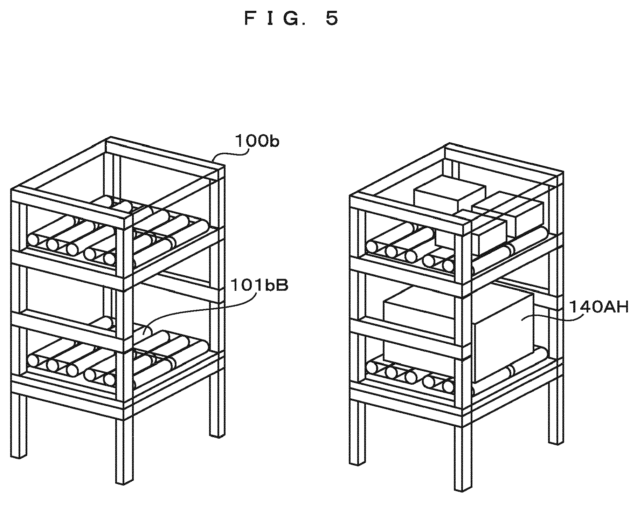

As a method for selecting the rack 100x during a delivery operation, for example, a method is considered which selects, as the rack 100x, a rack 100 including a large number of transfer units 101 having necessary articles stored therein. In this case, the number of times articles are transferred between the racks 100 is reduced and it is possible to improve transfer efficiency. When there are a plurality of racks including the same number of transfer units 101 having necessary articles stored therein, a rack 100 including a larger number of transfer units 101 in which no article is stored may be selected as the rack 100x. In this case, the number of times an unnecessary article is transferred to other racks 100y is reduced and it is possible to improve transfer efficiency. In some cases, some of the transfer units 101 are removed in order to store a large-size article 140, which will be described in detail below with reference to Fig. 5. When it is necessary to store the large-size article 140 and there are a small number of racks 100 capable of storing the large-size article 140, the rack 100 having the large-size article 140 stored therein needs to be preferentially selected as the rack 100x.

As a method for selecting the rack 100x during a storage operation, a method is considered which selects, the rack 100x, a rack 100 including a large number of empty transfer units 101. In this case, it is possible to store a large number of articles in one rack 100x in the work area 2000. However, when a small-size article 120 which is not stored in the tray 110 is stored, the rack 100 including the tray 110 in which the same type of small-size articles 120 are stored needs to be selected as the rack 100x. When the large-size article 140 is stored and there are a small number of racks 100 capable of storing the large-size article 140, a rack 100 having an empty storage space capable of storing the large-size article 140 needs to be preferentially selected as the rack 100x.

For a storage operation, a method is also considered which preferentially stores the same type of articles in one rack 100. For example, when there are a small number of articles which are the same type and are to be stored or when a small number of trays 110, each of which has a large number of small-size articles 120, are stored, a method is considered which selects, as the rack 100x, a rack 100 which stores a large number of articles of the same type and in which all of the transfer units 101 are not full of the same type of articles. In this case, the storage operation can be performed such that the same type of articles is collected in a single rack 100. As described above, it is possible to improve transfer efficiency during a delivery operation.

The target rack selection function 324 may select the candidates of the rack 100 to be used for the task 902, narrow down the candidates, using the function 325 of examining the exchange of articles between the target racks, and finally select the rack 100. As a method for selecting the candidates of the rack 100y during the delivery operation, for example, a method is considered which selects, as the candidate of the rack 100y, a rack 100 including an empty transfer unit 101 among the racks 100 which are required for the delivery operation and have the articles that are not stored in the rack 100x. It is possible to transfer an article which is unnecessary for the rack 100x from the rack 100x to the candidate of the rack 100y and to transfer an article which is necessary for the rack 100x from the candidate of the rack 100y to the rack 100x. When the candidate of the rack 100y is selected, it is examined in detail whether a target article can be exchanged (the function 325 of examining the exchange of articles between the target racks). When there are a plurality of candidates of the rack 100y which can exchange a target article, the distances between the rack 100x and the candidates of the rack 100y and the distances between the candidates of the rack 100y and the work area 2000 are calculated. Then, the candidate of the rack 100y having the minimum sum of the distances is selected as the rack 100y. Therefore, the moving distance of the robot 200x is reduced and it is possible to improve transfer efficiency. In addition, when a group of a plurality of racks 100y is selected, the distances between the rack 100x and the candidates of the rack 100y which is circulated first, the distance between the candidates of the rack 100y, and the distances between the work area 2000 and the candidates of the rack 100y which is finally circulated are calculated. Then, a group of the candidates of the rack 100y having the minimum sum of the distances is selected as a group of the racks 100y.

During the storage operation, the rack 100y is not necessarily selected. However, when the same type of articles is preferentially stored in one rack 100, it is preferable to move a small number of articles or trays 110, which are stored in the rack 100x and are a different type from the stored articles, from the rack 100x to another rack 100. A method is considered which selects, as the candidate of the rack 100y with which the rack 100x exchanges articles, a rack 100 that stores a large number of articles of the same type as the articles to be moved from the rack 100x and includes an empty transfer unit 101. In this case, it is possible to move the articles to be moved from the rack 100x to the candidate of the rack 100y that stores the articles of the same type as those. Therefore, it is possible to collect the same type of articles and to store the same type of articles in one rack. When the candidates of the rack 100y are selected, it is examined in detail whether a target article can be exchanged, similarly to the delivery operation. When there are a plurality of candidates of the rack 100y which can exchange the target article, the distances between the rack 100x, the rack 100y, and the work area 2000 are calculated and the candidate of the rack 100y having the minimum sum of the distances is selected as the rack 100y.

The rack state transition information items 915x and 915y of the racks 100x and 100y are generated (rack state transition information generation function 326) from the selection results of the racks 100x and 100y and the results of examining the exchange of articles between the rack 100x and the rack 100y and are collected as a task 902x.

The system operation planning function 330 is actually used when the task 902 is executed and includes a robot selection function 331 which selects the robot 200 for executing the task 902, a robot operation planning function 332 which plans the operation of the robot 200 in order to change, for example, the position of the rack 100 or the arrangement of articles described in the rack state transition information 915 of the task 902, and a user interface operation planning function 333 which plans the operation of the user interface 400 in order to inform the operator 20 of an operation for the rack 100 that has been transferred to the work area 2000 by the robot 200.

The task list execution management function 340 includes a task list progress management function 341 that manages whether each task 902 in the task list 903 has been completed, is being executed, or has not been executed, an individual task progress management function 342 which checks a current rack state 907 for the task 902 that is currently being executed, a robot state management function 344 which checks whether each robot 200 is executing the task or is being charged, and a rack information update function 344 which updates the rack state 907 of each rack 100 according to the progress situation of each task 902. In addition, the task list execution management function 340 includes a communication function 345 of the robot 200 and a communication function 346 of the user interface 400 for executing the tasks in the task list 90.

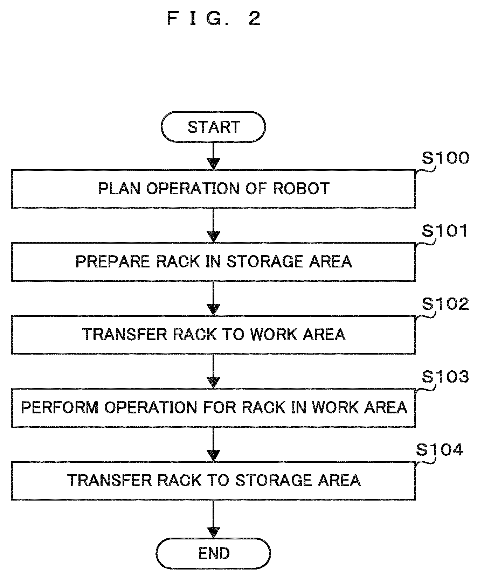

Fig. 2 is a flowchart illustrating an example of the overall operation of the transfer robot system 10a for one task 902x in this embodiment. First, the management computer 300 determines whether to perform the task 902x when it is checked that the rack 100 related to the task 902x is not used by other tasks 902 and the number of robots 200 to which no task 902 is allocated is equal to or greater than a value required for performing the task 902x. The process illustrated in Fig. 2 starts at the time when the execution of the task 902x is determined.

First, the management computer 300 determines the robot 200 related to the task 902x, using the robot selection function 331, plans the operation of the robot 200, using the robot operation planning function 332, and transmits the planned operation to the robot 200, using wireless communication (S100).

In this embodiment, two robots 200 are allocated. That is, a first robot 200x that transfers the rack 100x and a second robot 200y that supports the exchange of articles are allocated. However, a plurality of robots 200 which support the exchange of articles may be provided.

The robot is allocated to the rack 100x to be transferred as follows. The number of articles to be stored is compared with the number of stored articles. When there is no difference therebetween, only the first robot 200x is allocated. On the other hand, when there is a difference therebetween, two robots, that is, the first robot 200x and the second robot 200y are allocated.

In addition, even when there is a difference therebetween, one robot may be allocated, the rack 100x and the rack 100y may be electrically connected to each other, and both the rack 100x and the rack 100y may receive a control instruction from the robot 200x.

Furthermore, the rack 100x and the 100y may not be electrically connected to each other and the transfer unit of the rack 100x or the rack 100y may be driven on the basis of a control instruction from the robot 200x to transfer an article to the rack which is not driven.

The plan for the operation includes, for example, the moving paths 904x and 904y of the robots 200x and 200y, the time when the rack is loaded and installed, and the control flow and time of the transfer unit 101 of the rack 100. After planning the operation, the management computer 300 instructs the robots 200x and 200y to perform the planned operation through wireless communication.

When receiving the instruction, the robots 200x and 200y prepare the rack 100x in the storage area 1000 (S101). First, the robots 200x and 200y are moved to the storage area 1000 in which the rack 100 is present along the moving paths 904x and 904y included in the instruction. When arriving in the storage area 1000, the robot 200 prepares the rack 100x to be transferred to the work area 2000 on the basis of the instructed operation.

Specifically, the robot 200x is moved to the position of the rack 100x to be transferred and is loaded with the rack 100x. When the exchange of articles between the rack 100x and another rack 100y is needed, the robot 200x transfers the rack 100x to the position where the rack 100x can exchange articles with the rack 100y and the robot 200y is moved to the position of the rack 100y. Then, the robot 200x operates the transfer unit 101 of the rack 100x and the robot 200y operates the transfer unit 101 of the rack 100y to exchange articles. After the articles are exchanged, the rack 100x and the rack 100y have a relative position relationship capable of exchanging articles, or the robot 200y may transfer the rack 100y such that the relative positional relationship is established. After the preparation of the rack 100x is completed, the robot 200y notifies the management computer 300 that the preparation of the rack 100x has been completed. Then, the operation of the robot 200y ends.

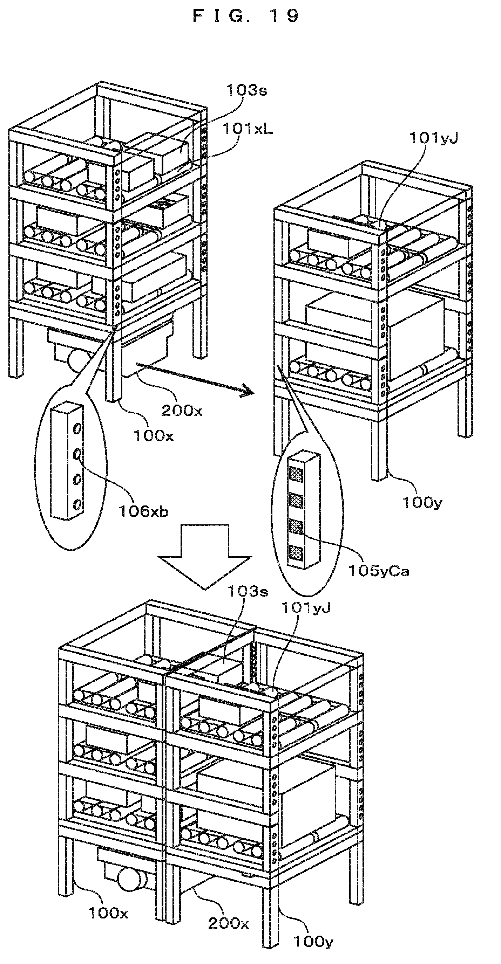

In the above-mentioned example, one robot 200 is allocated to one rack 100 and articles are exchanged between the racks 100. However, as illustrated in Fig. 19, the robot 200x may transfer the rack 100x to the vicinity of the rack 100y and electrically connect the rack 100x and the rack 100y. Then, the robot 200x may control both the transfer units 101x of the rack 100x and the transfer units 101y of the rack 100y at the same time. In this case, it is possible to exchange articles between the racks 1000 and to perform the task 902x, using only one robot 200.

Then, the robot 200x transfers the rack 100x to the work area 2000 and notifies the management computer 300 that the transfer of the rack 100x has been completed immediately after arriving in the work area 2000 (S102).

Immediately after the rack 100x arrives in the work area 2000, the operator 20 performs an operation for the rack 100x (S103). First, the management computer 300 instructs the operator 20 to perform an operation for the rack 100x through the user interface 400. The operator 20 performs the operation for the rack 100x on the basis of the instruction displayed on the screen of the user interface 400. After completing the operation, the operator 20 inputs information indicating the completion of the operation to the management computer 300 through the user interface 400.

Immediately after the operation of the rack 100x ends, the robot 200x returns the rack 100x to the storage area 1000 (S104).

First, when checking the completion of the operation in the task 902x, the management computer 300 instructs the robot 200x to resume movement.

Then, the robot 200x transfers the rack 100x to the storage area 1000 and places the rack 100x at the instructed position. Immediately after the placement of the rack 100x is completed, the robot 200x notifies the management computer 300 that the placement of the rack 100x has been completed. When the management computer 300 accepts the notice, the task 902x ends.

When determining that charging is required, the robot 200 transmits information indicating that charging is required to the management computer 300. When it is determined that the task 902 is being executed, the robot 200 transmits the information and a notice indicating that the placement of the rack has been completed at the same time. Then, the management computer 300 plans the moving path 904 of the robot 200 to the charging station 500 and transmits the moving path 904 to the robot 200. When receiving the moving path 904, the robot 200 is moved along the moving path 904, arrives in the charging station 500, and is electrically connected to the charging station. Then, a power supply 204 is charged. When charging is completed, the robot 200 transmits information indicating the completion of charging to the management computer 300 and waits for an instruction from the management computer 300.

In this embodiment, the charging station 500 is provided separately from the rack 100. However, the invention is not limited thereto. For example, an arbitrary rack may be provided with a rechargeable battery.

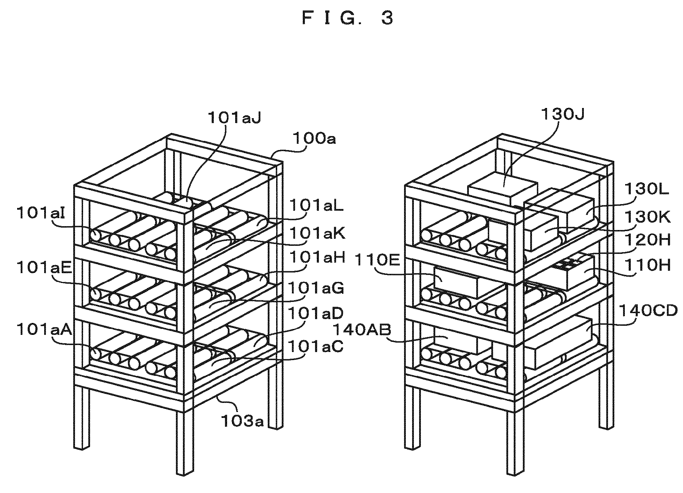

Next, the characteristics of this embodiment will be described in detail with reference to Figs. 3 to 15.

Fig. 3 is a diagram illustrating an example of the structure of a rack 100a in this embodiment.

A left figure illustrates a state in which no article is stored in a storage space and a right figure illustrates a state in which articles are stored in a storage space. In the left and right figures, for convenience of explanation, an upper plate is transparent such that the inside of the rack is seen. However, the upper plate is not necessarily transparent.

The rack 100a includes three stages of storage spaces. Each stage of storage space includes 2x2 sets of transfer units 101a. That is, the rack 100a includes a total of 12 sets of transfer units 101aA to 101aL. As such, since a plurality of transfer units 101 are provided, it is possible to individually move articles. When a large-size article is moved, a plurality of transfer units 101 may be operated at the same time. The number of stages of storage spaces and the number of sets of transfer units 101 in one stage of storage space are not particularly limited.

The transfer unit 101 is a mechanism which moves an article between the racks. It is preferable to mount, as the transfer unit 101, a sliding mechanism, such as a roller conveyer, a belt conveyer, or a mechanism in which a surface on which an article is placed is slippery and is inclined.

The mounting of these mechanisms makes it unnecessary to attach a mechanism, such as a fork or a manipulator, to the outside of the storage space of the rack and makes it possible to reduce the size of the system. Therefore, it is possible to maintain the storage ratio or the mobile power of the robot 200 at a high level.

It is preferable to control the reversal of the transfer direction of the transfer unit 101 in order to move articles in two directions. It is preferable that the transfer speed be variable in order to adjust the transfer speed according to the size or weight of an article.

For example, a method is considered which can perform control according to the reversal of the potential of power supplied to the transfer unit 101, a potential difference, or the amount of current. A method is considered which adjusts the amount of current using pulse width modulation control (PWM control).

The rack 100 can hold an article in the storage space. A small-size article 120 that is smaller than one set of the transfer units 101 is stored in a tray 110 having the same size as one set of the transfer units 101 and one set of the transfer units 101 is allocated to one tray 110. One set of the transfer units 101 is allocated to a medium-size article 130 having the same size as one set of the transfer units 101. A plurality of sets of the transfer units 101 are allocated to a large-size article 130 that is larger than one set of the transfer units 101.

A connected portion 102 which is electrically connected to the robot 200 is provided on a contacted surface 103 which comes into contact with the robot 200 when the robot 200 loads the rack 100 and is provided below the bottom of the transfer unit 101 of the rack 100. Therefore, it is not necessary to separately provide a touch surface and it is possible to reduce manufacturing limitations by an amount corresponding to the touch surface.

In this embodiment, the robot 200 gets under the rack 100, lifts the bottom of the rack 100, and holds the rack 100. Therefore, the bottom of the rack 100 becomes the contacted surface 103. However, the invention is not limited thereto. Since the connected portion 102 is provided on the bottom of the rack 100 as the contacted surface 103, it is possible to connect the robot 200, without damaging the mobile power of the robot 200.

For example, it is considered that the rack is connected to the side surface of the robot 200. In this case, it is necessary to attach a plate between the legs of the rack 100, which makes it difficult for the robot to move in a certain direction of the plate. However, in the structure according to this embodiment, the mobile power of the robot 200 is not lost.

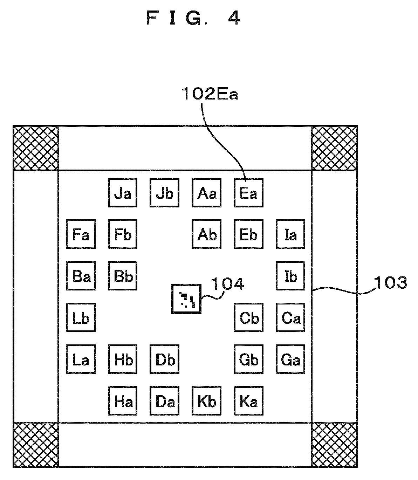

Fig. 4 is a diagram illustrating an example of the structure of the contacted surface 103 of the rack 100 in this embodiment. The contacted surface 103 includes the connected portions 102 corresponding to the number of sets of the transfer units 101 x 2. In this embodiment, the contacted surface 103 includes 24 connected portions 102. The connected portion 102 is a metal surface that conducts electricity and is electrically connected to the transfer unit 101. A cable which connects the connected portion 102 and the transfer unit 101 is provided in a frame forming the rack 100.

It is preferable that the connected portion 102 have a size greater than the average value of the movement control errors of the robot 200 in order to allow the movement control errors of the robot 200 when the connected portions 102 are connected to the robot 200.

The arrangement of the connected portions 102 on the contacted surface 103 illustrated in Fig. 4 is illustrative and the invention is not limited thereto. However, as illustrated in Fig. 4, it is preferable that the connected portions 102 be arranged in the same pattern in all directions. Similarly, connection portions 202 of the robot 200 are arranged in the same pattern in all directions. According to this structure, when the robot 200 gets under the rack 100 in any direction, it is possible to exactly allocate the connection portions 202 to all of the connected portions 102. Therefore, when the robot 200 accesses the rack 100 in any direction, it is possible to control any of the transfer units 101 of the rack 100, without performing the posture control of the robot 200 below the rack 100 due to a turning operation, while minimizing the number of connected portions 102 and the number of connection portions 202.

In Fig. 3, capital letters described in the connected portions 102 correspond to those of the transfer units 101 illustrated in Fig. 3. Among the connected portions 102 having the same capital letters, when potential is applied between a connected portion 102a having a small "a" and a connected portion 102b having a small "b", a current flows through a corresponding transfer unit 101.

The upper right corner of the contacted surface 103 illustrated in Fig. 4 corresponds to the corner of the rack 100 in a direction in which the transfer units 101A, 101E, and 101I are provided in Fig. 3.

In this embodiment, a direction from the transfer unit 101A to the transfer unit 101C, in which articles are moved, in Fig. 3 is a forward direction. In a case in which the reversal of the moving direction of the transfer unit 101 can be controlled, for example, when the potential of the connected portion 102a is higher than that of the connected portion 102b, the transfer unit 101 may be operated so as to move an article in the forward direction. When the potential between the connected portions 102a and 102b is reversed, the transfer unit 101 may be operated so as to move an article in a reverse direction. When the transfer speed of the transfer unit 101 is variable, for example, the transfer speed may change depending on the potential difference between the connected portions 102a and 102b or the absolute value of the amount of current.

It is considered that the robot 200 gets under the rack 100 in four directions. It is preferable to symmetrically arrange the connected portions 102 in four directions in order to appropriately control the transfer units 101 of the rack 100 when the robot 200 gets under the rack 100 in any direction.

Similarly, the connection portions 202 of the robot 200 are symmetrically arranged in four directions. Therefore, when the robot 200 gets under the rack 100 in any direction, the connection portions of the robot 200 can be connected to the corresponding connected portions 102, while the robot maintains its posture, without being rotated. According to this structure, the robot 200 can check its direction with respect to the rack 100. Therefore, it is possible to check the operational relationship between the connection portion 202 to which a current will flow and the transfer unit 101 to be operated and thus to appropriately control the transfer units 101 of the rack 100.

In a case in which the robot 200 is loaded with the rack 100, when there is a structure capable of recognizing a rack ID 906 of the rack 100 to be loaded, it is possible to check whether the robot 200 is loaded with the rack 100 corresponding to an instruction from the management computer 300. When the loaded rack 100 does not correspond to the instruction, the robot 200 can issue an alarm to the management computer 300.

When there is a structure in which the robot 200 can recognize a relative positional relationship with the rack 100, it is possible to check whether the connection portions 202 of the robot 200 can be connected to the connected portions 102 of the rack 100. When it is recognized that there is a connection load, the robot 200 can finely adjust its position. In order to achieve the structure, the rack 100 according to this embodiment includes a rack bottom marker 104 on the bottom of the rack. The rack bottom marker 104 is provided as, for example, a two-dimensional barcode.

Preferably, the rack 100 is a mechanism in which a plurality of transfer units 101 and a member that supports the transfer units 101 are detached from each other, in order to store the large-size article 140 that is larger than the storage space corresponding to one stage in a height direction.

In addition, it is preferable that the remaining transfer units 101 be controlled by the same method as the rack 100a. For example, Fig. 5 is a diagram illustrating an example of
the structure of a rack 100b obtained by detaching transfer units 101E to 101H from the rack 100a illustrated in Fig. 3. A left figure illustrates a state in which no article is stored in the storage space and a right figure illustrates a state in which articles are stored in the storage space. In both the figures, an upper plate is transparent such that the inside of the rack is seen. As such, the transfer robot system 10a may include a plurality of types of racks 100, such as the general rack 100a and the rack 100b for storing a large-size article 140AH that is not accommodated in a storage space corresponding to one stage.

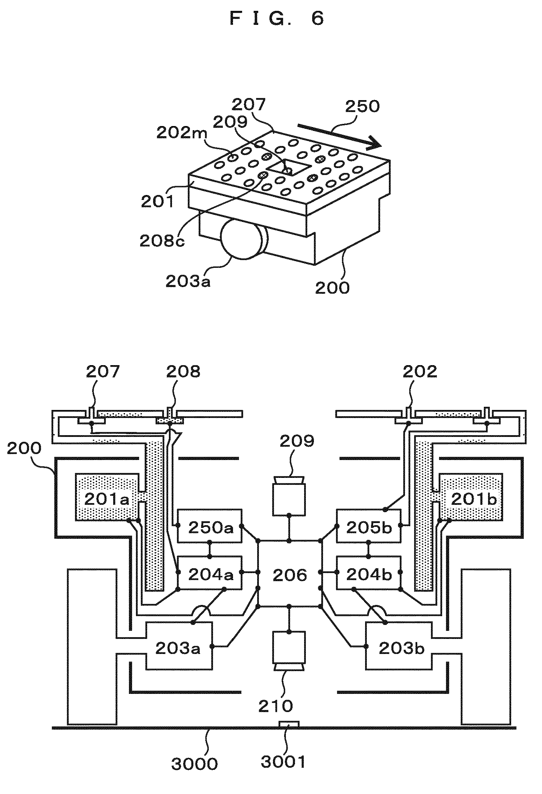

Fig. 6 is a diagram illustrating an example of the structure of the robot 200 according to this embodiment. A left figure is a diagram illustrating the outward appearance of the robot 200 and a right figure is a front view illustrating the internal structure of the robot 200, as viewed from a direction opposite to a traveling direction 250 of the robot. In this embodiment, a control unit 211 that controls the operation of the robot 200 is divided into a robot main computer 206 and a connection portion feeding controller 205. However, the robot main computer 206 and connection portion feeding controller 205 may be integrated into one device.

In this embodiment, the robot 200 gets under the rack 100 and operates a loading and unloading unit 201 to lift the rack 100. The loading and unloading unit 201 is a mechanism which is provided at the upper part of the robot 200 and is operated to lift the rack 100, and includes a motor, a motor controller, a gear and a shaft that convert a rotational motion into an up-and-down motion in the vertical direction, a controller that controls the motor, and an upper plate.

The loading and unloading unit 201 is connected to the power supply 204 and the robot main computer 206 and controls its motor to lift the upper plate on the basis of an instruction from the robot main computer 206. The number of components other than the upper plate may be two or more. It is preferable that a plurality of motors be synchronized with each other to have the same motion, in order to keep the upper plate horizontal.

When the robot 200 lifts the rack 100, first, the robot main computer 206 controls a driving unit 203 such that the robot 200 gets under the rack 100. In this state, the robot main computer 206 instructs the loading and unloading unit 201 to control the motor such that the upper plate is lifted. The loading and unloading unit 201 gradually lifts the upper plate in response to the instruction. Then, the surface of the upper plate of the loading and unloading unit 201 reaches the height of the contacted surface 103 which is the bottom of the rack 100 and comes into contact with the contacted surface 103. The surface of the upper plate of the loading and unloading unit 201 is referred to as a contact surface 207 since it comes into contact with the contacted surface 103 of the rack 100. In addition, when the upper plate of the loading and unloading unit 201 is lifted, the legs of the rack 100 are separated from the ground and the rack 100 is in a lifted state. That is, the robot 200 is loaded with the rack 100 by the loading and unloading unit 201.

When the rack 100 is installed while being loaded on the robot 200, first, the robot main computer 206 controls the driving unit 203 such that the robot 200 is moved to the position where the rack 100 is installed. After the robot 200 arrives at the position, the robot main computer 206 instructs the loading and unloading unit 201 to control the motor such that the upper plate is dropped. The loading and unloading unit 201 drops the rack 100 while gradually dropping the upper plate in response to the instruction. Then, the legs of the rack 100 reach the ground and come into contact with the ground. When the upper plate of the loading and unloading unit 201 is dropped, the contact surface 207 of the robot 200 is separated from the contacted surface 103 of the rack 100 and the installation of the rack 100 is completed.

A plurality of connection portions 202 which are electrically connected to the connected portions 102 of the rack 100 are attached to the upper plate of the loading and unloading unit 201.

In this embodiment, 24 connection portions 202a to 202x are attached, similarly to the number of connected portions 102 of the rack 100. The connection portions 202 are connected to the connection portion feeding controller 205 through cables. In addition, a plurality of connection terminals 208 for charging which are electrically connected to connection terminals 501 for charging of the charging station 500 are attached to the upper plate of the loading and unloading unit 201. In this embodiment, four connection terminals 208 for charging are attached and are connected to the power supply 204 through cables.

As such, according to the structure in which the robot is electrically connected to the rack 100 or the charging station 500 at the same time as it comes into contact with the rack 100 or the charging station 500 during a loading and unloading operation, it is not necessary to separately provide a contact portion and it is possible to reduce manufacturing limitations by an amount corresponding to the contact portion. In addition, the mobile power of the robot 200 which gets under the rack 100 is not lost. A method for connecting the robot 200 and the rack 100 and a method for connecting the robot 200 and the charging station 500 may be the same in order to simplify the mounting of the transfer robot system 10a.

In this embodiment, the robot 200 operates the driving unit 203 to move. The driving unit 203 includes, for example, a motor, a motor controller, and wheels. In addition, the driving unit 203 may be provided with a rotary encoder for measuring the rotation of the wheels.

At least two motors and three wheels which are independently operated are required to achieve the two-dimensional movement of the robot 200. For example, a structure is considered in which the robot 200 includes a left wheel and a right wheel, a motor and a motor controller for independently controlling the left and right wheels, and one caster. In this case, the robot 200 rotates the left and right wheels at the same speed to go straight and rotates the left and right wheels in the opposite direction to turn. The driving unit 203 is connected to the power supply 204 and the robot main computer 206 and controls its motor to move the robot 200 on the basis of an instruction from the robot main computer 206.

The power supply 204 is, for example, a battery. The power supply 204 supplies power to the loading and unloading unit 201, the driving unit 203, the connection portion feeding controller 205, the robot main computer 206, a rack recognition sensor 209, and a self-position recognition sensor 210 of the robot 200. In this embodiment, power is indirectly supplied to the rack recognition sensor 209 and the self-position recognition sensor 210 through the robot main computer 206. However, it may be determined whether to indirectly or directly supply power to each device, on the basis of the mounting of the device.

When the robot 200 operates the transfer units 101 of the rack 100, the power supply 204 supplies power to the transfer units 101 of the rack 100 through the connection portion feeding controller 205, the connection portions 202, and the connected portions 102 of the rack 100. In addition, the power supply 204 is connected to the connection terminal 208 for charging which is attached to the upper plate of the loading and unloading unit 201 through a cable. The connection terminal 208 for charging is provided on the assumption that it is connected to the connection terminal 501 for charging in the charging station 500. The charging station 500 applies a potential difference between the connection terminals 208 for charging in the robot 200 through the connection terminals 501 for connection to change the power supply 204 of the robot 200. In Fig. 5, the robot 200 includes two power supplies 204. However, the number of power supplies 204 is not particularly limited.

In this embodiment, the robot 200 operates the connection portion feeding controller 205 to control the transfer units 101 of the rack 100. The connection portion feeding controller 205 is connected to the connection portions 202, the power supply 204, and the robot main computer 206 and applies potential to each connection portion 202, using the power supply 204, in response to an instruction from the robot main computer 206. When the connection portions 202 are connected to the connected portions 102 of the rack 100 and the connection portion feeding controller 205 applies potential to each connected portion 102, a potential difference is generated between the connected portions 102a and 102b corresponding to the transfer unit 101. Then, the transfer unit 101 is operated. In Fig. 5, the robot 200 includes two connection portion feeding controllers 205 which take charge of different groups of the connection portions 202. However, the number of connection portion feeding controllers 205 is not particularly limited.

The robot main computer 206 is a combination of a CPU, a RAM, an external storage medium, and a wireless communication function. The external storage medium is, for example, an HDD or a flash memory and the wireless communication function is, for example, a wireless LAN. The robot main computer 206 is supplied with power from the power supply 204 and controls other devices in the robot 200, that is, the loading and unloading unit 201, the driving unit 203, the connection portion feeding controller 205, the rack recognition sensor 209, and the self-position recognition sensor 210. In addition, the robot main computer 206 communicates with the management computer 300, using the wireless communication function to receive an operation command and to transmit an operation state. In addition, when the robot 200 transfers articles between the racks 100 together with other robots 200, the robot main computer 206 communicates with other robots 200, using the wireless communication function, to report situations.

In order to move the robot 200 along the moving path 904 received from the management computer 300, the robot main computer 206 calculates the position and posture of the robot on the basis of the measurement result acquired by the self-position recognition sensor 210, calculates the difference between the posture of the robot 200 based on the calculation results of the position and posture of the robot and the moving path 904 and a target moving direction, and determines the latest operation parameters of the driving unit 203 on the basis of the calculation result of the difference.

Here, the measurement result of the rotary encoder which is a component of the driving unit 203 may be acquired and used for self-position recognition or the determination of the operation parameters. In addition, in order to check the rack ID 906 of the rack 100 which will be transferred or has the transfer units 101 to be operated and to check the shift of the position and posture of the robot relative to the rack 100, the rack bottom marker 104 of the rack 100 is read on the basis of the measurement result acquired by the rack recognition sensor 209, the rack ID 906 of the rack 100 is recognized, and the shift of the position and posture of the robot 200 relative to the rack 100 is calculated.

The rack recognition sensor 209 is provided such that it can measure information on the upper side in the vertical direction in order to measure the rack bottom marker 104 of the rack 100 when the robot 200 gets under the rack 100. The rack recognition sensor is selected according to the characteristics of the rack bottom marker 104. For example, when the rack bottom marker 104 is a two-dimensional barcode, the rack recognition sensor 209 is, for example, a monochrome camera or a color camera. The rack recognition sensor 209 is connected to the robot main computer 206 performs measurement in response to an instruction from the robot main computer 206 and transmits the measurement result to the robot main computer 206.

The self-position recognition sensor 210 is provided in order to recognize the position of the robot 200 when the robot 200 is moved along the moving path 904, to check the shift of the robot 200 from the moving path 904, and to calculate a control parameter to be transmitted to the driving unit 203. The self-position recognition sensor 210 is selected according to a self-position recognition method.

For example, when a method is used which attaches floor markers 3001, such as two-dimensional barcodes, to a floor 3000 in a lattice shape, reads the floor marker 3001, and recognizes a position and posture, the self-position recognition sensor 210 is, for example, a monochrome camera or a color camera which is attached so as to face the floor.

When a method is used which acquires the configuration map of the entire space, calculates which part of the configuration map the shape of a part of the space measured by the robot 200 is matched with, and recognizes a position and posture, the self-position recognition sensor 210 is, for example, a laser distance sensor or a sonar that is attached in order to measure obstacles on the horizontal plane. A plurality of self-position estimation sensors 210 may be provided and the space measured by the robots 200 may be different types.

The rack recognition sensor 210 is connected to the robot main computer 206, performs measurement in response to an instruction from the robot main computer 206, and transmits the measurement result to the robot main computer 206.

In this embodiment, the control unit 211 which controls the operation of the robot 200 is divided into the robot main computer 206 and the connection portion feeding controller 205 that controls the supply of power to the connection portions. However, the invention includes the structures described in other embodiments and is not limited thereto. The control unit 211 in which the robot main computer 206 and the connection portion feeding controller 205 are integrated with each other may be provided

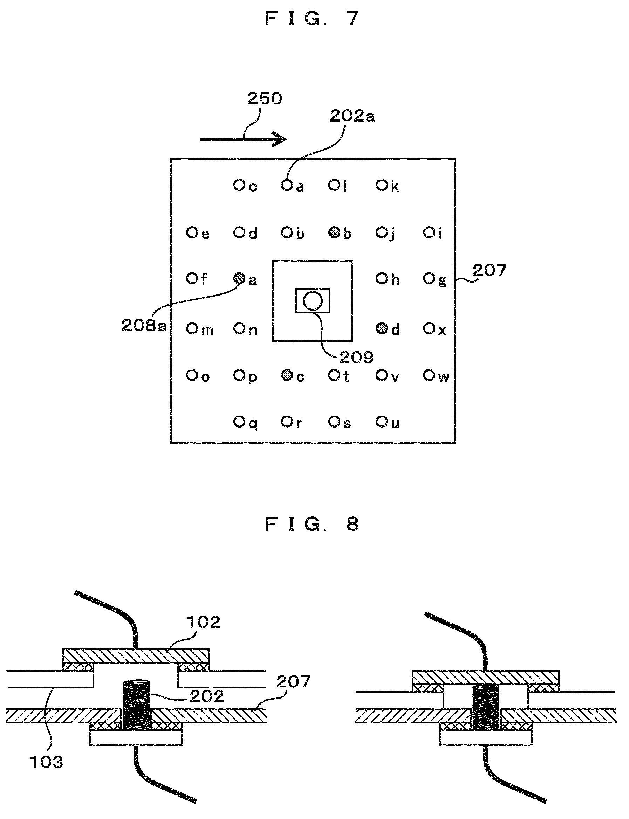

Fig. 7 is a diagram illustrating an example of the structure of the contact surface 207 of the robot 200 in this embodiment. The contact surface 207 includes the connection portions 202, of which the number is equal to the number of connected portions 102 of the rack 100. In this embodiment, the contact surface 207 includes 24 connection portions 202. The connection portion 202 is a metal spring that conducts electricity and is electrically connected to the connection portion feeding controller 205. It is preferable that the connection portion 202 be as thin as possible such that it does not protrude from the connected portion 102, in order to allow the movement control error of the robot 200 when connected to the rack 100. Two or more contact terminals 208 for charging are needed. In this embodiment, four contact terminals 208 for charging are provided. The contact terminal 208 for charging is a metal spring, similarly to the connection portion 202, and is electrically connected to the power supply 204.

Fig. 8 is a diagram schematically illustrating an aspect of the connection between the connected portion 102 of the rack 100 and the connection portion 202 of the robot 200. In Fig. 8, a left figure illustrates a state before the connection and a right figure illustrates a state after the connection. When the robot 200 gets under the rack 100 and operates the loading and unloading unit 201 to lift the upper plate, first, the leading end of the connection portion 202 comes into contact with the surface of the connected portion 102 and is electrically connected thereto. When the upper plate is further lifted, the spring of the connection portion 202 is compressed and the contacted surface 103 of the rack 100 and the contact surface 207 of the robot come into contact with each other. According to this structure, a load which is applied to the connected portion 102 and the connection portion 202 is only restoring force corresponding to the compression of the spring of the connection portion 202 and the contacted surface 103 and the contact surface 207 are subjected to a load corresponding to the weight of the rack 100. In addition, the connection terminal 501 for charging in the charging station 500 and the contact terminal 208 for charging in the robot 200 may be the same type as the connected portion 102 of the rack 100 and the connection portion 202 of the robot 200.

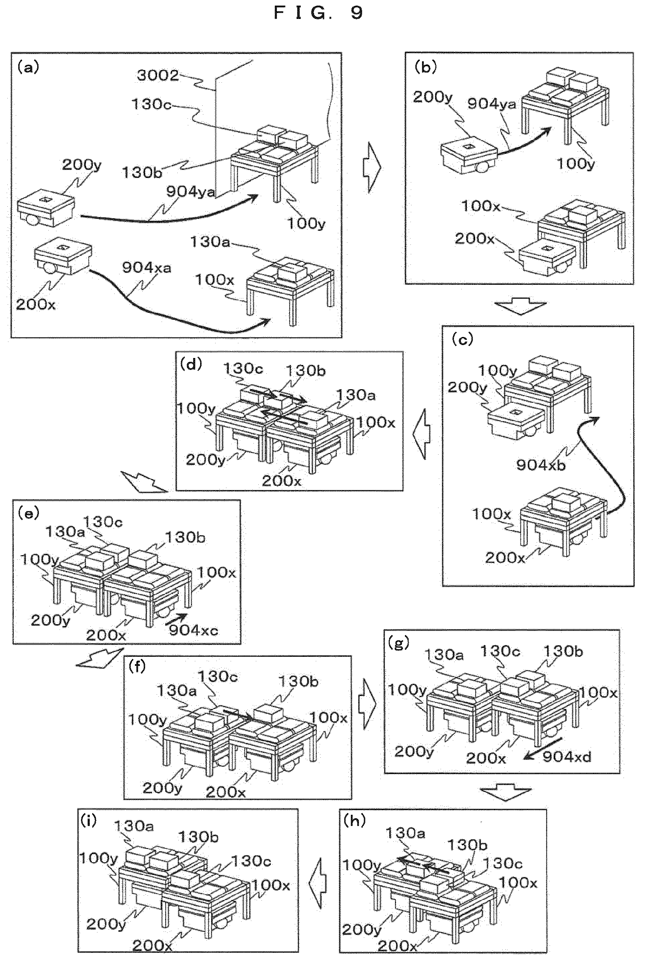

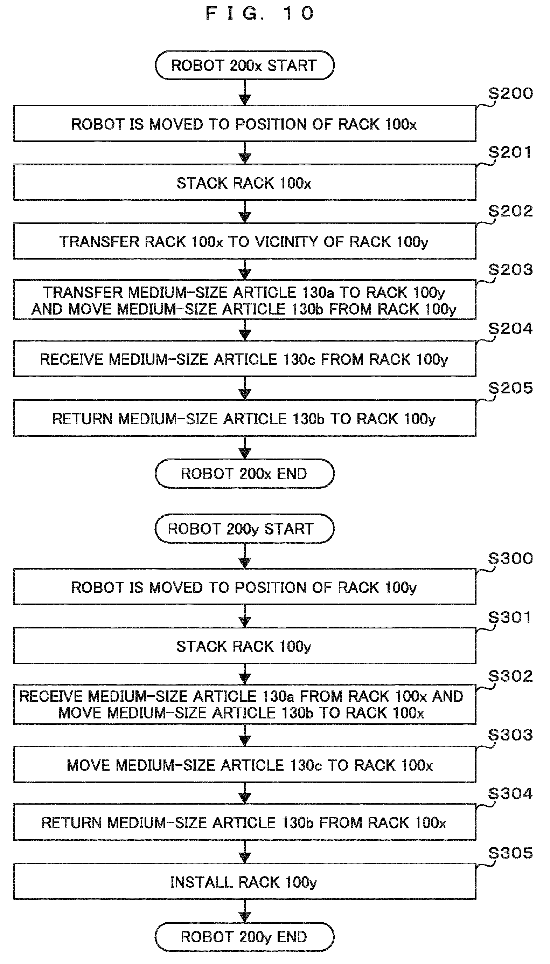

Next, the preparation (S101) of the rack 100x illustrated in Fig. 2 will be described. Fig. 9 is a diagram schematically illustrating an aspect in which the rack 100x according to this embodiment is prepared. Fig. 10 is a flowchart illustrating an example of the operation of the robots 200x and 200y at that time. Figs. 9 and 10 illustrate only an example of one scene of the preparation (S101) of the rack 100x in this embodiment. According to the structure of the invention, articles can be transferred between the racks in various scenes other than this scene. In this scene, articles are exchanged between the lower storage spaces of the racks 100. Therefore, in Fig. 9, the upper storage space and the middle storage space of the rack 100 are not illustrated.

In this example, one robot 200 is allocated to one rack 100 and articles are exchanged between the racks 100. However, as illustrated in Fig. 19, the robot 200x may transfer the rack 100x to the vicinity of the rack 100y and electrically connect the rack 100x and the rack 100y. Then, the robot 200x may control both the transfer units 101x of the rack 100x and the transfer units 101y of the rack 100y at the same time. In this case, it is possible to exchange articles between the racks 10 and to perform the task 902x, using only one robot 200.

In this case, for example, inter-rack connected portions 105 and inter-rack connection portions 106 are provided in frames of the side surfaces of the rack 100x and the rack 100y, respectively, such that the rack 100x and the rack 100y can be electrically connected to each other. According to this structure, the robot 200x can control the operation of the transfer units 101 of the rack 100x and the rack 100y. At that time, it is preferable that the connected portions 102 for controlling the operation of each transfer unit 101 of two racks 100 be provided on the contacted surface 103 of the rack 100x or 100y. It is desirable that the connection portions 202 corresponding to the connected portions 102 of the rack 100 be provided on the contact surface 207 of the robot 200x.

However, when an article is unloaded from the rack 100x, which is a transfer target, to the rack 100y that does not need to be transferred, only the transfer units 101 of the rack 100x are operated to exchange an unnecessary article and a necessary article with the rack 100y.

As such, only one transfer robot 200x is used to perform a loading operation and an unloading operation. Therefore, for example, when there are an excessive number of operations, it is possible to instruct a transfer operation using only one robot. As a result, it is possible to perform a large number of transfer operations using a small number of robots.

In the scene illustrated in Fig. 9, the rack 100y is installed in the vicinity of a wall surface 3002. When the rack 100y is not moved, it is difficult to install the rack 100x in the vicinity of the wall surface 3002 and to exchange articles. Both the rack 100x and the rack 100y are the same type as the rack 100a illustrated in Fig. 3. For each transfer unit 101, the letter "a" illustrated in Fig. 3 is replaced with the letter "y" or "x". The directions of the rack 100x and the rack 100y in Fig. 9 are the same as the direction of the rack 100a illustrated in Fig. 3.

The management computer 300 instructs the robots 200x and 200y illustrated in Fig. 9 to transfer a medium-size article 130c stored in the rack 100y to the rack 100x and to transfer a medium-size article 130a stored in the rack 100x to the rack 100y, thereby preparing the rack 100x. This operation is a portion of the task 902. The management computer 300 has already made a plan for, for example, the moving paths 904x and 904y of the robots 200x and 200y, the loading and installation time of the racks 100x and 100y, and the control procedure and time of the transfer units 101x and 101y of the racks 100x and 100y (S100 in Fig. 2). The robots 200x and 200y are operated according to the planned instruction to prepare the rack 100x (S101).

In the scene illustrated in Fig. 9, a state in which the medium-size article 130c is interposed between the wall surface 3002 and the medium-size article 130b changes to a state in which only the medium-size article 130c is stored in the lowest storage space of the rack 100x, which is a portion of the task 902. As a method for achieving this operation, for example, the following methods are considered: a method which transfers the rack 100y so as to be separated from the wall surface 3002; and a method which moves the medium-size article 130b to the rack 100x, moves a target medium-size article 130c to the rack 100x, and returns the medium-size article 130b to the rack 100y.

Figs. 9 and 10 illustrate an example in which the latter method is selected as the method according to this embodiment.

First, the robots 200x and 200y are moved to the positions of the racks 100x and 100y along the instructed moving paths 904xa and 904ya, respectively (Fig. 9(a) and S200 and S300 in Fig. 10). When the robots 200x and 200y arrive at the positions of the racks 100x and 100y, that is, when the robots 200x and 200y get under the racks 100x and 100y, respectively, they operate the loading and unloading portions 201x and 201y to load the racks 100x and 100y (Figs. 9(b) and 9(c) and S201 and S301 in Fig. 10). Then, the robot 200x transfers the rack 100x to the position where articles can be exchanged between the rack 100x and the rack 100y along the instructed moving path 904xb (Fig. 9(c) and S202 in Fig. 10). In this example, the robot 200y does not transfer the rack 100y. However, the robot 200y is loaded with the rack 100y in order to align the height since the robot 200x is loaded with the rack.

Then, the robots 200x and 200y move an article, which is stored in the rack 100y and is to be transferred to the work area, from the rack 100y to the rack 100x and move an article, which is stored in the rack 100x and is not to be transferred to the work area 2000, from the rack 100x to the rack 100y (S203 to S205 and S302 to S304 in Fig. 10). In this embodiment, an operation which moves the medium-size article 103c stored in the rack 100y to the rack 100x and moves the medium-size article 130a stored in the rack 100x to the rack 100y is given as an example. The operation of the robots 200x and 200y will be described in detail.

First, the medium-size article 130a is moved from the rack 100x to the rack 100y and the medium-size article 130b is temporarily moved from the rack 100y to the rack 100x (Fig. 9(d) and S203 and S302 in Fig. 10). The reason why the medium-size article 130b is moved is as follows. As described above, the medium-size article 130c stored in a transfer unit 10lyB needs to be moved to the rack 100x through a transfer unit 101yD and the medium-size article 130b stored in the transfer unit 101yD blocks the movement of the medium-size article 130c.

After being ready to control the transfer units 101x of the rack 100x, the robot 200x transmits a message indicating that the robot 200x is ready to control the transfer units 101x to the robot 200y, using the wireless communication function of the robot main computer 206x. When receiving the message, the robot 200y transmits a message indicating that the robot 200y is ready to control the transfer units 101y of the rack 100y to the robot 200x, using the wireless communication function, after being ready to control the transfer units 101y. Then, the robot 200x receives the message and recognizes that the robot 200y is ready to perform control.

When receiving the message, the robot 200x starts to control the transfer units 101x. When transmitting the message, the robot 200y starts to control the transfer units 101y. It is necessary to synchronize the control flow of the transfer units 101x and 101y between the robots 200x and 200y in order to exchange articles between the rack 100x and the rack 100y using the transfer units 101x and 101y and the message is transmitted and received in order to achieve the synchronization. The distance between the robots 200x and 200y is small enough to neglect a delay in wireless communication.

When the robot 200 controls the transfer units 101 of the rack 100, the connection portion 202 to which potential will be applied varies depending on the position of the robot 200 relative to the rack 100. In this embodiment, when planning the operation of the robot 200, the management computer 300 determines to which of the connection portions 202 potential is applied, considering the direction of the rack 100, and adds the information to an operation command to be transmitted to the robot 200. As another method, when it is difficult for the management computer 300 to recognize the direction of the rack 100, the robot 200 may recognize the posture of the rack 100, using the rack recognition sensor 209, and determine the connection portion 202 to which potential will be applied.

In addition, the time required to move an article corresponding to one set of the transfer units 101 (half of the size or the rack 100 or half mass) is measured in advance, the robot 200 stores the time as a parameter in the external storage medium of the robot main computer 206 and uses the time as the operating time of the transfer unit 101.

The robot 200x appropriately applies potential to the connection portion 202x, using the connection portion feeding controller 205x, to operate the transfer unit lOlxB of the rack 100x in the forward direction by a distance corresponding to one set of the transfer units 101 and to operate the transfer units 101xA and 101xC in the reverse direction by a distance corresponding to one set of the transfer units 101. In the case of Fig. 9(d), the potential of a connection portion 202xg is higher than that of a connection portion 202xh in order to operate the transfer unit 101xB in the forward direction. The potential of a connection portion 202xb is higher than that of a connection portion 202xa in order to operate the transfer unit 101xA in the reverse direction. In addition, the potential of a connection portion 202xn is higher than that of a connection portion 202xm in order to operate the transfer unit 101xC in the reverse direction.

At the same time, the robot 200y appropriately applies potential to the connection portion 202y, using the connection portion feeding controller 205y, to operate the transfer units 101yB and 101yD of the rack 100y in the forward direction by a distance corresponding to one set of the transfer units 101. In the case of Fig. 9(d), the potential of a connection portion 202yg is higher than that of a connection portion 202yh in order to operate the transfer unit 101yB in the forward direction. The potential of a connection portion 202ys is higher than that of a connection portion 202yt in order to operate the transfer unit 101yD in the forward direction.

As a result, the medium-size article 130a is moved from the transfer unit 101xC to the transfer unit 101xA of the rack 100x. The medium-size article 130b is moved from the transfer unit 101yD of the rack 100y to the transfer unit 101xB of the rack 100x. The medium-size article 130c is moved from the transfer unit 101yB to the transfer unit 101yD of the rack 100y.

In addition, the robot 200x operates the transfer unit 101xA in the reverse direction by a distance corresponding to one set of the transfer units 101, using the connection portion feeding controller 205x. The robot 200y operates the transfer unit 101yC in the reverse direction by a distance corresponding to one set of the transfer units 101, using the connection portion feeding controller 205y. In the robot 200x, the potential of the connection portion 202xb is high between the connection portions 202xa and 202xb. In the robot 200y, the potential of the connection portion 202yn is high between the connection portions 202ym and 202yn. As a result, the medium-size article 130a is moved between the transfer unit 101xA of the rack 100x to the transfer unit 101yC of the rack 100y.

Then, the medium-size article 130c is moved from the rack 100y to the rack 100x (Figs. 9(e) and 9(f) and S204 and S303 in Fig. 10).

First, the position of the rack 100x is shifted by a distance corresponding to half mass and the robot 200x transfers the rack 100x along the instructed moving path 904xc such that the transfer unit 101yL of the rack 100y comes into contact with the transfer unit 101xI of the rack 100x (Fig. 9(e)).

Immediately after the movement of the robot 200x is completed, the transfer units 101xA and 101yD are operated to move the medium-size article 130c (Fig. 9(f)). In this case, similarly to S203 and S302 in Fig. 10, the robots 200x and 200y exchange a message indicating that they are ready to control the transfer units. Then, the robot 200x operates the transfer unit 101xA in the forward direction by a distance corresponding to one set of the transfer units 101, using the connection portion feeding controller 205x, and the robot 200y operates the transfer unit 101yD in the forward direction by a distance corresponding to one set of the transfer units 101, using the connection portion feeding controller 205y. In this case, the operations of the robots 200x and 200y are synchronized with each other. In the robot 200x, the potential of the connection portion 202xa is higher than that of the connection portion 202xb. In the robot 200y, the potential of the connection portion 202ys is higher than that of the connection portion 202yt. As a result, the medium-size article 130c is moved from the transfer unit 101yD of the rack 100y to the transfer unit 101xA of the rack 100x.

Finally, the medium-size article 130b which is temporarily stored in the rack 100x is returned to the rack 100y (Figs. 9(g) and 9(h) and S205 and S304 in Fig. 10).

First, the position of the rack 100x is shifted by a distance corresponding to one mass and the robot 200x transfers the rack 100x along the instructed moving path 904xd such that the transfer unit 101yC of the rack 100y comes into contact with the transfer unit 101xB of the rack 100x (Fig. 9(g)).

Immediately after the movement of the robot 200x is completed, similarly to S203 and S302 in Fig. 10, the robots 200x and 200y exchange a message indicating that they are ready to control the transfer units. In this way, the robot 200x operates the transfer unit 101xB in the reverse direction by a distance corresponding to one set of the transfer units 101, using the connection portion feeding controller 205x, and the robot 200y operates the transfer units 101yA and 101yC in the reverse direction by a distance corresponding to one set of the transfer units 101, using the connection portion feeding controller 205y (Fig. 9(h)). In this case, the operations of the robots 200x and 200y are synchronized with each other. In the robot 200x, the potential of the connection portion 202xh is higher than that of the connection portion 202xg. In the robot 200y, the potential of the connection portion 202yb is higher than that of the connection portion 202ya and the potential of the connection portion 202yn is higher than that of the connection portion 202ym. As a result, the medium-size article 130a is moved from the transfer unit 101yC to the transfer unit 101yA of the rack 100y and the medium-size article 130b is moved from the transfer unit 101xB of the rack 100x to the transfer unit 101yC of the rack 100y.

As a result of this series of operations, the medium-size article 130c is stored in the rack 100x and the medium-size articles 130a and 130b are stored in the rack 100y. Finally, the robot 200y operates the loading and unloading unit 201y to install the rack 100y (Fig. 9(i) and S305 in Fig. 10). Then, the process ends.

As such, in the transfer robot system 10a according to this embodiment, the robot 200 can move articles between the racks 100.

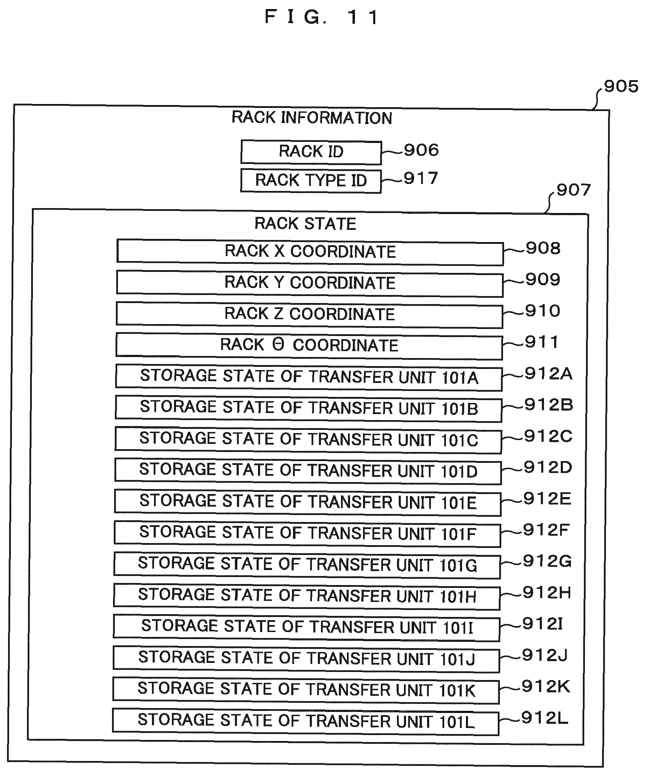

Fig. 11 is a diagram illustrating an example of the structure of rack information 905 related to the rack 100 which is checked by the management computer 300 according to this embodiment. The rack information 905 includes a rack ID 906, a rack type ID 917, and a rack state 907. The rack ID 906 is numbers for identifying the rack 100 and the rack type ID 917 is numbers for identifying the type of rack when there are a plurality of types of racks.

In this embodiment, it is assumed that, since there is no substantial difference between the rack 100a illustrated in Fig. 3 and the rack 100b illustrated in Fig. 5, the same rack type ID 917 is given to the racks 100a and 100b, without distinction. The rack state 907 includes a rack X coordinate 908, a rack Y coordinate 909, a rack Z coordinate 910, a rack Θ coordinate 911, and the storage states 912A to 912L of the transfer units 101. The number of storage states 912 of the transfer units 101 is equal to the number of transfer units 101 which can be provided in the rack 100. In this embodiment, the number of storage states 912 of the transfer units 101 is 12.

The rack X coordinate 908 and the rack Y coordinate 909 indicate the position of the rack 100 in the two-dimensional plane and the rack Θ coordinate 911 indicates the direction of the rack 100 in the two-dimensional plane. The rack Z coordinate 910 is the coordinate of the rack 100 in the vertical direction and indicates a height in a state in which the legs of the rack floor 3000 are on the ground.

The storage state 912 of the transfer unit 101 indicates whether the transfer unit 101 is present, the type of article stored, and the number of articles. The rack 100a illustrated on the right side of Fig. 3 will be described as an example. A storage state 912aJ of a transfer unit 101aJ indicates "present, a medium-size article 130J, and one".

When 20 small-size articles 120H are stored in a tray 120H, a storage state 912aH of a transfer unit 101aH indicates "present, the small-size article 120H, and 20".

In addition, no article is stored in a transfer unit 101aI. In this case, a storage state 912aI of the transfer unit 101aI indicates "present, no article, and 0".

When the large-size article 140 is stored using a plurality of transfer units 101, the type of article and the number of articles are input for one main transfer unit 101 and the main transfer unit 101 is input for the other transfer units. That is, for the transfer units 101aA and 101aB in which a large-size article 140AB is stored, the storage state 910aA of the transfer unit 101aA indicating "present, the large-size article 140AB, and one" is input and the storage state 912aB of the transfer unit 101aB indicating "present, the transfer unit 101aA, and 0" is input.

In the rack 100b illustrated in Fig. 5, the middle transfer units 101bE to 101bH are removed. Then, "absent" is input to the item indicating whether the transfer unit 101b is present in the storage states 912bE to 912bH of the transfer units 101b. On the left side of Fig. 5, the storage states 912bE to 912bH of the transfer units 101b indicating "absent, no article, and 0" are input. On the right side of Fig. 5, when the middle transfer units 101bE to 101bH are not removed, it is difficult to store the large-size article 140AH. In this case, it is considered that the middle transfer units 101bE to 101bH take charge of the transfer of the large-size article 140AH.

Therefore, the storage states 912bE to 912bH of the transfer units 101b indicating "absent, the transfer unit 101bA, and 0" are input. In the description of the storage states, when the large-size article 140AH is desired to be moved from the rack 100b illustrated on the right side of Fig. 5 to another rack 100, the rack state 907b of the rack 100b is checked to determine the size of the storage space required to store the large-size article 140AH.

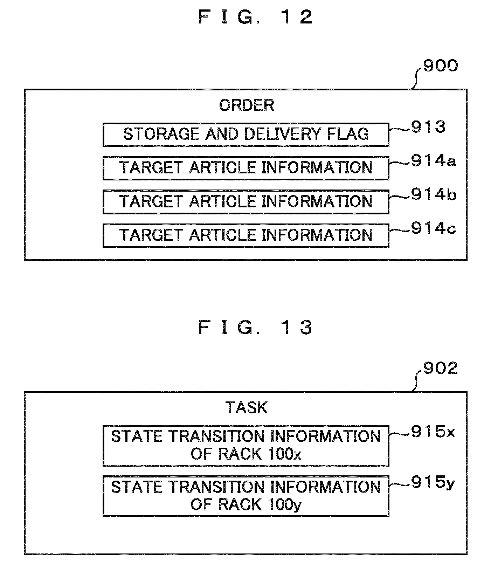

Fig. 12 is a diagram illustrating an example of the structure of the order 900 which is input to the management computer 300 in this embodiment. The order 900 includes a storage and delivery flag 913 and target article information 914 corresponding to the number of article types. In Fig. 12, the number of target article information items 913 is 3. However, the invention is not limited thereto. The storage and delivery flag 913 is a flag for designating storage or delivery. The target article information 914 includes the type of article to be stored or delivered and the number of articles. A set of a plurality of orders 900 is the order list 901.

Fig. 13 is a diagram illustrating an example of the structure of the task 902 which is created by the management computer 300 to execute the order 900 in this embodiment. The task 902 includes rack state transition information 915 corresponding to the number of related racks 100. Fig. 13 illustrates the task 902 when the rack 100x and the rack 100y are related. The number of related racks 100 is not particularly limited.

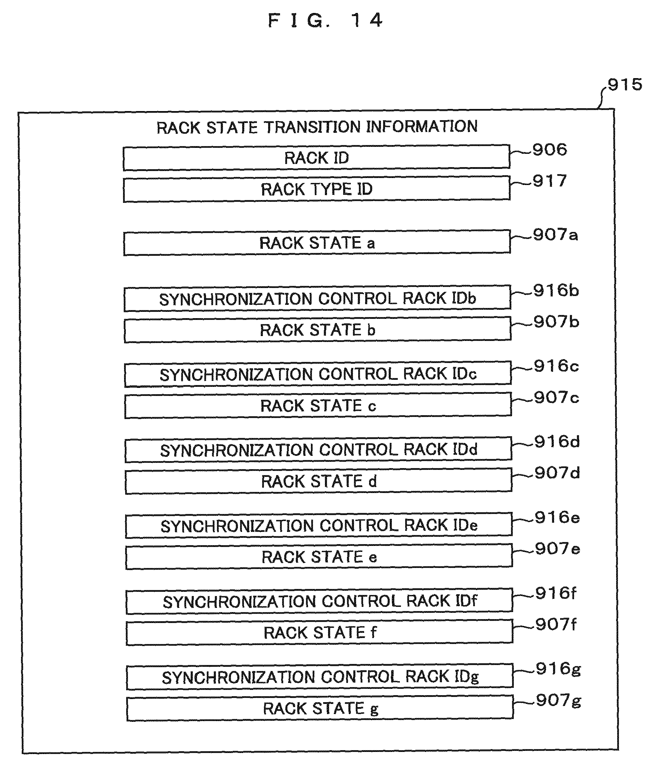

Fig. 14 is a diagram illustrating an example of the structure of the state transition information 915 of the rack 100 in this embodiment. The state transition information 915 of the rack 100 includes the rack ID 906, the rack type ID 917, the rack state 907, and a synchronization control rack ID 916. The state transition information 915 includes a plurality of rack states 907 and a plurality of synchronization control rack IDs 916. The number of rack states 907 is one greater than the number of synchronization control rack IDs 916. Fig. 14 illustrates an example in which the number of rack states 907 is 7. However, the number of rack states 907 is not limited thereto.

How the rack state 907 of the rack 100 has changed is described in the state transition information 915 of the rack 100 and the state transition information 915 of the rack 100 includes the position (908 to 910) and direction (911) of the rack 100, the number of times the article (912) stored in the transfer unit 101 is moved, and the rack state 907. The rack state 907a of the rack 100 when the task 902 starts is certainly described. The movement of the rack 100 is represented by a combination of linear changes in the coordinates and the rack state 907 of each node is input. For example, when a series of motions of the rack 100 includes a first translational motion, turning, and a second translational motion, a total of four rack states 907a to 907d, that is, a rack state 907a when the task 902 starts, a rack state 907b after the first translational motion, a rack state 907c after turning, and a rack state 907d after the second translational motion are described.

Here, when articles are exchanged between the racks 100x and 100y, it is necessary to synchronize the operations of the racks, as described above. When the rack 100x changes from a rack state 907xe to a rack state 907xf after it is synchronized with another rack 100y, the rack ID 906y of the rack 100y is input to the synchronization control rack ID 916f corresponding to the rack state 907xf. In addition, for a synchronization control rack ID 916xb corresponding to a rack state 907xb of the rack 100x indicating the operation result of the rack 100x when the rack 100x is independently operated without any synchronization, a number indicating "nothing" is input. Here, when the transfer of the rack 100x to the work area 2000 by the robot 200x is completed, the robot 200x notifies the management computer 300 of the arrival of the rack. Then, after receiving information indicating the completion of an operation from the operator 20, the management computer 300 instructs the robot 200x to resume movement and the robot 200x resumes movement. When a number indicating the user interface 400 which is installed in the work area 2000 is input to a synchronization control rack ID 916xp corresponding to a rack state 907xp indicating the transfer result of the rack 100x after the resumption of movement, it is possible to wait for a report on the completion of the operation from the operator 20 through the management computer 300.

The management computer 300 determines a related robot 200 and plans the operation of the robot 200, on the basis of the task 902 illustrated in Fig. 13 (S100).

According to the transfer robot system 10a of this embodiment, a lift height is shifted between the racks 100 by a value corresponding to the storage space. Therefore, it is possible to exchange articles between the storage spaces with different heights.

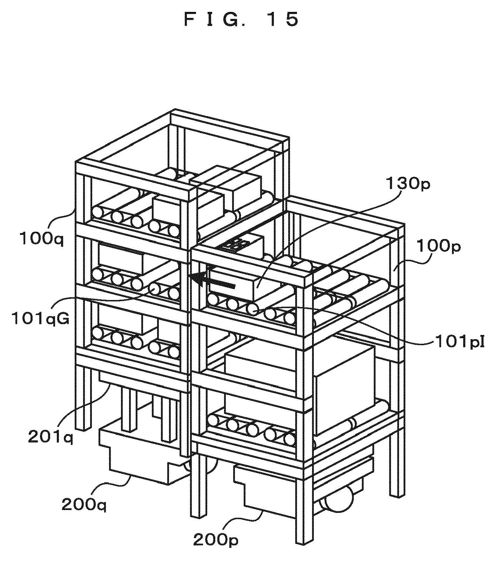

Fig. 15 is a diagram illustrating an aspect in which articles are exchanged between the storage spaces with different heights in this embodiment. In the scene illustrated in Fig. 15, in order to move a medium-size article 130p which is stored in a transfer unit 101pI located at the top of the rack 100p to a transfer unit 101pG located in the middle of the rack 100q, a robot 200q operates the loading and unloading unit 201 to lift a rack 101q by a distance corresponding to the height of a storage space, thereby aligning the height of the top of the rack 100p with the height of the middle of the rack 100q. In this state, the robot 200p operates a connection portion feeding controller 205p such that the transfer unit 101pI of the rack 100p is operated in the reverse direction and the robot 200q operates a connection portion feeding controller 205q such that the transfer unit 101qG of the rack 100q is operated in the reverse direction. In this way, it is possible to move the medium-size article 130p from the transfer unit 101pI located at the top of the rack 100p to the transfer unit 101qG located in the middle of the rack 100q.

As illustrated in Fig. 15, the exchange of articles between the storage spaces with different heights is performed in stages a plurality of number of times. Therefore, when the loading and unloading unit 201 of the robot 200 can lift the rack 100 by a height corresponding to one storage space of the rack 100, it is possible to move the article stored in the transfer unit 101 located at the top of the rack 100 to the transfer unit 101 located at the bottom of the rack 100.

In the above-mentioned embodiment, a transfer robot system includes a plurality of movable racks each of which includes a transfer unit for moving a stored article, at least one robot that is capable of transferring a predetermined rack to a predetermined position, and a management terminal that issues a transfer instruction to the robot. The robot detachably holds the rack and includes a connection portion that can be electrically connected to the rack, a driving unit, and a control unit. The control unit moves the robot to a vicinity of a first rack, using the driving unit, connects the robot to the first rack through the connection portion, moves the robot and the first rack to a vicinity of a second rack, supplies power to the transfer unit of the first rack or/and the second rack through the connection portion, operates the transfer unit corresponding to a position where an article to be moved is placed, and moves the article to be moved from a rack in which the article to be moved is placed to a predetermined position of another rack.

As such, according to the above-described embodiment, in a normal movement mode, it is not necessary to carry a heavy body, such as a multi-stage storage space. In addition, when an article is transferred, it is possible to exchange the stored articles or trays between the racks and to transfer the rack in which a plurality of necessary articles or trays are stored. As such, in the transfer robot system which can carry a large number of articles at one time, it is possible to achieve an automated transfer technique which has high transfer time efficiency and high energy efficiency in both the normal movement mode and an article transfer mode.

### Embodiment 2

In this embodiment, an example of a transfer robot system 10b which can exchange articles between storage spaces with different heights even when a loading and unloading unit 201 of a robot 200 does not have capability to lift a rack 100 by a height corresponding to one storage space of the rack 100 will be described.

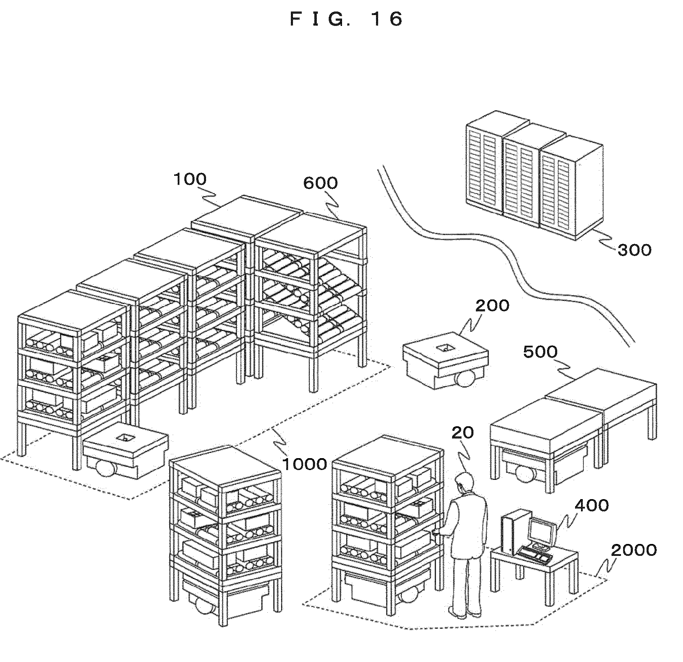

Fig. 16 is a diagram illustrating an example of the structure of the transfer robot system 10b according to this embodiment. The transfer robot system 10b includes two or more racks 100, two or more robots 200, a management computer 300, a user interface 400, a charging station 500, and a stage change transfer rack 600. In this embodiment, the rack 100, the robot 200, the management computer 300, the user interface 400, and the charging station 500 have the same structure and basic function as those in Embodiment 1 and thus the description thereof will not be repeated. In addition, in this embodiment, a storage area 1000, a work area 2000, and an operator 20 are located at the same position as those in Embodiment 1 and thus the description thereof will not be repeated.

The transfer robot system 10b according to this embodiment differs from the transfer robot system 10a according to Embodiment 1 in that the stage change transfer rack 600 is newly provided and is used to exchange articles between storage spaces with different heights in two racks 100.

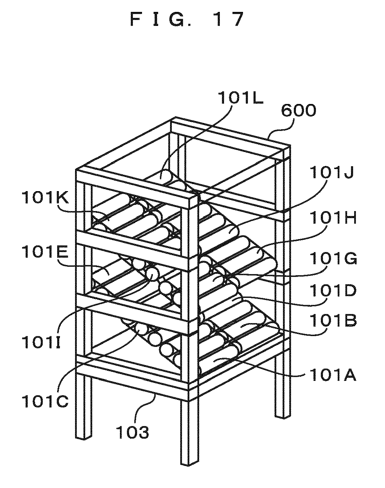

Fig. 17 is a diagram illustrating an example of the structure of the stage change transfer rack 600 according to this embodiment. The stage change transfer rack 600 has a similar structure to the rack 100 and comes into contact with and is electrically connected to the robot 200, similarly to the rack 100. Therefore, a contacted surface 103, a connected portion 102, and a rack bottom marker 104 are the same as those in the rack 100. In addition, the stage change transfer rack 600 has the same transfer units 101 as the rack 100. The robot 200 transfers the stage change transfer rack 600, using the loading and unloading unit 201 and the driving unit 203, and controls the transfer unit 101 of the stage change transfer rack 600, using the connection portion feeding controller 205. A method for controlling the transfer unit 101 of the stage change transfer rack 600 is the same as the method for controlling the transfer unit 101 of the rack 100. In this embodiment, the stage change transfer rack 600 includes 12 transfer units 101, of which the number is equal to the number of transfer units 101 in the rack 100. However, the numbers of transfer units may be different from each other.

The structure of the stage change transfer rack 600 differs from the structure of the rack 100 in that the transfer units 101 of the stage change transfer rack 600 can transfer articles to storage spaces with different heights and are provided so as to be inclined. In the stage change transfer rack 600 according to this embodiment, transfer units 101A, 101C, and 101E can be operated in the forward direction to transfer an article from the middle to the bottom of the rack and can be operated in the reverse direction to transfer an article from the bottom to the middle of the rack. Similarly, transfer units 101G, 101I, and 101K can be operated in the forward direction to transfer an article from the top to the middle of the rack and can be operated in the reverse direction to transfer an article from the middle to the top of the rack.

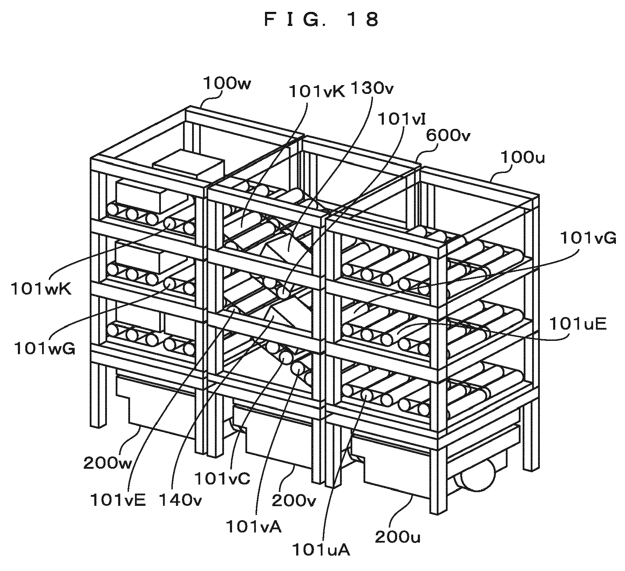

Fig. 18 is a diagram illustrating an aspect in which articles are exchanged between storage spaces with different heights in Embodiment 2. Specifically, a stage change transfer rack 600v is used to move a medium-size article 130v which is stored in a transfer unit 101wK located at an upper storage space of a rack 100w to a transfer unit 101uE located at a middle storage space of a rack 100u and to move a large-size article 140v which is stored in transfer units 101wG and 101wH located at a middle storage space of the rack 100w to transfer units 101uA and 101uB located at a lower storage space of the rack 100u.

In this embodiment, the rack 100u, the stage change transfer rack 600v, and the rack 100w are operated by robots 200u, 200v, and 200w, respectively.

Here, the movement of the medium-size article 130v will be described. First, the robots 200w and 200v are synchronized with each other and simultaneously operate a transfer unit 101wK of the rack 100w and a transfer unit 101vK of the stage change transfer rack 600v in the forward direction by a distance corresponding to one set of the transfer units 101 to move the medium-size article 130v to the stage change transfer rack 600v. Then, the robot 200v simultaneously operates the transfer units 101vK and 101vI of the stage change transfer rack 600v in the forward direction by a distance corresponding to one set of the transfer units 101. Then, the robot 200v simultaneously operates the transfer units 101vG and 101vI in the forward direction by a distance corresponding to one set of the transfer units 101 and stops the transfer units at one time.

Then, the robots 200v and 200u are synchronized with each other and operate the transfer unit 101vG of the stage change transfer rack 600v and a transfer unit 101vA of the rack 100v in the forward direction by a distance corresponding to one set of the transfer units 101. Then, the medium-size article 130v is moved to the transfer unit 101vA of the rack 100v. As a result, the object is achieved. The large-size article 140v can be moved by the same process as described above. The large-size article 140v may be moved at the same time as the medium-size article 130v.

In this embodiment illustrated in Fig. 18, three robots 200 are used. However, only two robots 200 may be used to achieve the exchange of articles using the stage change transfer rack 600v. For example, the robot 200w illustrated in Fig. 18 also functions as the robot 200u. The following method is considered. First, the robot 200w controls the transfer unit 101w of the rack 100w, moves to the rack 100u, and controls the transfer unit 101u of the rack 100u.

In this embodiment, the stage change transfer rack 600 is treated as a kind of rack 100. The stage change transfer rack 600 may also function as the rack 100 or the rack 100 may not be provided. When the transfer robot system 10b according to this embodiment uses the rack 100 illustrated in Fig. 3 or Fig. 5 and the stage change transfer rack 600 illustrated in Fig. 17, the rack 100 and the stage change transfer rack 600 are distinguished from each other by rack type IDs 917 included in rack information 905 or rack state transition information 915.

In Embodiment 1, when articles are exchanged between the upper storage space of the rack 100p and the lower storage space of another rack 100q, the robot 200 needs to lift the rack 100q by a height corresponding to at least one storage space and the loading and unloading unit 201 needs to have a stroke corresponding to the height. In this embodiment, since the stage change transfer rack 600 is introduced, the loading and unloading unit 201 has only a sufficient stroke to lift the rack 100 or the stage change transfer rack 600. Therefore, it is possible to simplify the structure of the robot 200.

### REFERENCE SIGNS LIST

10 TRANSFER ROBOT SYSTEM
20 OPERATOR
30 ADMINISTRATOR
100 RACK
101 TRANSFER UNIT
102 CONNECTED PORTION
103 CONTACTED SURFACE
104 RACK BOTTOM MARKER
105 INTER-RACK CONNECTED PORTION
106 INTER-RACK CONNECTION PORTION
110 TRAY
120 SMALL-SIZE ARTICLE
130 MEDIUM-SIZE ARTICLE
140 LARGE-SIZE ARTICLE
200 ROBOT
201 LOADING AND UNLOADING UNIT
202 CONNECTION PORTION
203 DRIVING UNIT
204 POWER SUPPLY
205 CONNECTION PORTION FEEDING CONTROLLER
206 ROBOT MAIN COMPUTER
207 CONTACT SURFACE
208 CONNECTION TERMINAL FOR CHARGING
209 RACK RECOGNITION SENSOR
210 SELF-POSITION RECOGNITION SENSOR
211 CONTROL UNIT
250 ROBOT TRAVELING DIRECTION
300 MANAGEMENT TERMINAL
310 MANAGEMENT TERMINAL FUNCTION
320 TASK LIST CREATION FUNCTION
321 ORDER LIST INPUT FUNCTION
322 ORDER LIST REORDERING FUNCTION
323 TARGET ARTICLE STORAGE RACK LIST DRAWING FUNCTION
324 TARGET RACK SELECTION FUNCTION
325 FUNCTION OF EXAMINING EXCHANGE OF ARTICLES BETWEEN TARGET RACKS
326 RACK STATE TRANSITION INFORMATION GENERATION FUNCTION
330 SYSTEM OPERATION PLANNING FUNCTION
331 ROBOT SELECTION FUNCTION
332 ROBOT OPERATION PLANNING FUNCTION
333 USER INTERFACE OPERATION PLANNING FUNCTION
340 TASK LIST EXECUTION MANAGEMENT FUNCTION
341 TASK LIST PROGRESS MANAGEMENT FUNCTION
342 INDIVIDUAL TASK PROGRESS MANAGEMENT FUNCTION
343 ROBOT STATE MANAGEMENT FUNCTION
344 RACK INFORMATION UPDATE FUNCTION
345 ROBOT COMMUNICATION FUNCTION
346 USER INTERFACE COMMUNICATION FUNCTION
400 USER INTERFACE
500 CHARGING STATION
501 CONNECTION TERMINAL FOR CHARGING
600 STAGE CHANGE TRANSFER RACK
900 ORDER
901 ORDER LIST
902 TASK
903 TASK LIST
904 MOVING PATH
905 RACK INFORMATION
906 RACK ID
907 RACK STATE
908 RACK X COORDINATE
909 RACK Y COORDINATE
909 RACK Z COORDINATE
911 RACK Θ COORDINATE
912 STORAGE STATE OF TRANSFER UNIT
913 STORAGE AND DELIVERY FLAG
914 TARGET ARTICLE INFORMATION
915 RACK STATE TRANSITION INFORMATION
916 SYNCHRONIZATION CONTROL RACK ID
917 RACK TYPE ID
1000 STORAGE AREA
2000 WORK AREA
3000 FLOOR
3001 FLOOR MARKER
3002 WALL SURFACE

## Claims

1. A transfer robot system comprising:
a plurality of movable racks each of which includes a transfer unit for moving a stored article;
at least one robot that is capable of transferring a predetermined rack to a predetermined position; and
a management terminal that issues a transfer instruction to the robot,
wherein the robot detachably holds the rack and includes:
a connection portion that is electrically connected to the rack;
a driving unit; and
a control unit, and
the control unit moves the robot to a vicinity of a first rack, using the driving unit, connects the robot to the first rack through the connection portion, moves the robot and the first rack to a vicinity of a second rack, supplies power to the transfer unit of the first rack or/and the second rack through the connection portion, operates the transfer unit corresponding to a position where an article to be moved is placed, and moves the article to be moved from a rack in which the article to be moved is placed to a predetermined position of another rack.

2. A transfer robot system comprising:
a plurality of movable racks;
at least one robot that is capable of transferring a predetermined rack to a predetermined position; and
a management terminal that issues a transfer instruction to the robot,
wherein the rack includes:
a transfer unit that moves an article stored in the rack; and
a connected portion that is electrically connected to the robot,
the robot includes:
a loading and unloading portion that detachably holds the rack and installs the rack at a predetermined position;
a connection portion that is electrically connected to the rack and supplies power to the rack through the connected portion;
a driving unit that drives the robot; and
a control unit that receives a transfer instruction from the management terminal and controls an operation of the robot, and
the control unit moves the robot to the connected portion of a first rack using the driving unit, connects the connection portion of the robot to the connected portion of the first rack, moves the robot and the first rack to a vicinity of a second rack, using the loading and unloading unit and the driving unit, supplies power to the transfer unit of the first rack or/and the second rack through the connection portion, operates the transfer unit corresponding to a position where an article to be moved is placed, and moves the article to be moved from a rack in which the article to be moved is placed to a predetermined position of another rack.

3. The transfer robot system according to claim 2, further comprising:
a second robot that detachably holds the second rack, wherein, when the article to be moved which is stored in the first rack is moved to a predetermined position of the transfer unit of the second rack, power is supplied to a region including at least the predetermined position of the transfer unit through the connection portion of the second robot and the connected portion of the second rack and the region including the predetermined position of the transfer unit is driven to place the article to be moved at the predetermined position.

4. The transfer robot system according to claim 2, further comprising:
a second robot that detachably holds the second rack, wherein, when the article to be moved which is stored in the second rack is moved to a predetermined position of the transfer unit of the first rack, power is supplied to a region including at least the predetermined position of the transfer unit through the connection portion of the first robot and the connected portion of the first rack and the region including the predetermined position of the transfer unit is driven to place the article to be moved at the predetermined position.

5. The transfer robot system according to claim 2,
wherein the transfer unit is divided into a plurality of regions in which articles can be placed, and
the connected portion includes connected portions which correspond to the plurality of regions in order to drive each of the plurality of divided regions of the transfer unit.

6. The transfer robot system according to claim 5,
wherein the control unit connects the connection portions to the connected portions corresponding to one or a plurality of transfer units to be operated and operates the connected portions at the same time to move an article which is placed across the plurality of regions of the transfer unit.

7. The transfer robot system according to claim 5,
wherein the transfer unit moves the article placed thereon such that the article slides on the transfer unit, and
the control unit controls the connection portion such that a first divided transfer unit and a second transfer unit which is adjacent to the first transfer unit are operated at the same time to move the article placed on the first transfer unit to the second transfer unit.

8. The transfer robot system according to claim 2,
wherein the robot gets under a target rack and transfers the target rack,
the connected portion is formed on a surface that is lower than the transfer unit and faces the robot which gets under the rack, and
the connection portion is formed on a surface of the robot which faces the connected portion.

9. The transfer robot system according to claim 2,
wherein the robot includes a rack recognition sensor that recognizes a relative posture between the robot and the rack,
the robot is moved to the position of the rack, recognizes the relative posture, and determines whether an electrical connection to the rack is available on the basis of the relative posture, and
when it is determined that the connection is not available, the position of the robot is corrected on the basis of the relative posture.

10. The transfer robot system according to claim 9,
wherein a plurality of the connected portions and a plurality of the connection portions are provided so as to be symmetric with respect to a plurality of directions, and
the control unit selects the connection portion corresponding to the connected portion on the basis of the relative posture between the robot and the rack.

11. The transfer robot system according to claim 5,
wherein some of the divided transfer units are detachable, and
after some of the divided transfer units are detached, the other transfer units which are not detached are operable.

12. The transfer robot system according to claim 2, further comprising:
a charging device that charges a power supply of the robot,
wherein the robot includes a connection portion for charging which is electrically connected to the charging device,
the charging device includes a connected portion for charging which is electrically connected to the robot, and
the connection portion for charging in the robot is formed on the same surface as the connection portion to the rack.

13. The transfer robot system according to claim 12,
wherein the charging device is formed integrally with the rack, and
the connected portion for charging and the connection portion for charging can be connected to each other at the same time as the connected portion of the rack and the connection portion of the robot are connected to each other.

14. The transfer robot system according to claim 2,
wherein the connection portion or the connected portion has a spring-like structure in order to reduce a load which is applied from the rack to the robot.

15. The transfer robot system according to claim 2,
wherein any one or all of the racks are stage change transfer racks having inclined transfer units.

16. A transfer device that is capable of transferring a rack having a transfer unit for moving a stored article to a predetermined position, comprising:
a loading and unloading unit that detachably holds the rack and installs the rack at a predetermined position;
a connection portion that is electrically connected to the rack and supplies power to the rack;
a driving unit that moves the robot; and
a control unit that controls an operation of the robot,
wherein the control unit moves the robot to a first rack, using the driving unit, moves the first rack to a vicinity of a second rack through the connection portion of the robot, using the driving unit, supplies power to the transfer unit of the first rack or/and the second rack through the connection portion, operates the transfer unit corresponding to a position where an article to be moved is placed, and moves the article to be moved from a rack in which the article to be moved is placed to a predetermined position of another rack.
